(19) Europäisches Patentamt
European Patent Office
Office européen des brevets

(11) **EP 2 265 980 B1**

(12) **EUROPÄISCHE PATENTSCHRIFT**

(45) Veröffentlichungstag und Bekanntmachung des Hinweises auf die Patenterteilung:
**10.03.2021 Patentblatt 2021/10**

(21) Anmeldenummer: **09723466.0**

(22) Anmeldetag: **17.03.2009**

(51) Int Cl.:
***G02B 5/18*** (2006.01)

(86) Internationale Anmeldenummer:
**PCT/EP2009/001969**

(87) Internationale Veröffentlichungsnummer:
**WO 2009/115304 (24.09.2009 Gazette 2009/39)**

(54) **DIFFRAKTIVES ELEMENT MIT HOHER WELLENFRONTEBENHEIT**

DIFFRACTIVE ELEMENT WITH HIGH WAVE-FRONT FLATNESS

ÉLÉMENT DE DIFFRACTION PRÉSENTANT UNE PLANÉITÉ ÉLEVÉE DE FRONT D'ONDE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **18.03.2008 DE 102008014778**

(43) Veröffentlichungstag der Anmeldung:
**29.12.2010 Patentblatt 2010/52**

(73) Patentinhaber: **Fraunhofer-Gesellschaft zur Förderung der angewandten Forschung e.V.
80686 München (DE)**

(72) Erfinder:
• **KLEY, Ernst-Bernhard
07743 Jena (DE)**
• **ZEITNER, Uwe, Detlef
99423 Weimar (DE)**

(74) Vertreter: **Pfenning, Meinig & Partner mbB
Patent- und Rechtsanwälte
Theresienhöhe 11a
80339 München (DE)**

(56) Entgegenhaltungen:
JP-A- 2003 294 947   JP-A- 2004 226 610
US-A- 4 921 319   US-A1- 2003 032 039

**Beschreibung**

Die vorliegende Erfindung bezieht sich auf die Realisierung eines diffraktiven Elementes mit hoher Wellenfrontebenheit.

Einen wichtigen Bestandteil für eine Reihe von Anwendungen derartiger diffraktiver Elemente im Bereich der Optik bilden Hologramme, Beugungsgitter und/oder andere diffraktive Elemente. Die Herstellung von diffraktiven Elementen erfolgt nach dem Stand der Technik derart, dass typischerweise mittels lithographischer Prozesse, wie Elektronenstrahl-, Laser- oder Photolithographie eine Feinstruktur auf ein flächiges Substrat aufgebracht wird, wie von H.P. Herzig in "Micro-Optics-Elements, systems and applications" (Taylor & Francis, 1997) beschrieben.

Die US 4,921,319 A1 beschreibt beispielsweise eine Hologramm-Struktur mit Reflexion an einer Grenzfläche zu Luft. Die Hologramm-Struktur enthält einen Film mit einem Reliefmuster, wobei das Reliefmuster einem Substrat zugewandt ist und von diesem mittels Abstandshaltern beabstandet ist.

Die US 2003/0032039 A1 offenbart ein Verfahren sowie eine Vorrichtung zur Detektion von biomolekularen Wechselwirkungen, wobei eine optische Gitterstruktur aus einem Substrat, einer Abdeckschicht und einem zweidimensionalen Gitter, das zwischen dem Substrat und der Abdeckschicht angeordnet ist, besteht.

Ein weiteres Beispiel für ein diffraktives Element ist in der JP 2003-294947 A beschrieben, wobei das diffraktive Element als Trennelement für polarisiertes Licht verwendbar ist. Dieses Element enthält ein unteres Substrat sowie ein oberes transparentes Substrat, zwischen denen ein Brechungsfilm mit einem Gitter angeordnet ist.

Ein weiteres Trennelement für polarisiertes Licht beschreibt die JP 2004-226610, wobei ein doppelbrechender Film auf ein transparentes Substrat aufgebracht ist und der doppelbrechende Film mit einer Gitterstruktur versehen ist.

Eine wichtige Anforderung an das jeweilige diffraktive Element liegt darin, die vom diffraktiven Element zu erzeugende optische Funktion mit möglichst hoher Wellenfrontgenauigkeit zu realisieren. Dies ist ein wesentliches Merkmal für die Qualität des diffraktiven Elementes selbst und damit der Güte der Ergebnisse der durchgeführten Anwendungen.

Theoretisch lässt sich eine hohe Wellenfrontgenauigkeit laut U.D. Zeitner und E.B. Kley in "Advanced Lithography for Micro-Optics" (2006) dadurch erreichen, dass eine sehr genaue laterale Positionierung der Feinstrukturen gewährleistet ist.

In der Praxis hängt die erreichbare Wellenfrontgenauigkeit jedoch nicht nur von der Bearbeitungsmethode, sondern auch von der Güte der verwendeten Substrate ab. Allgemein lässt sich sagen, dass die Wellenfront, die mit Hilfe eines diffraktiven Elementes erzeugt wird, umso besser ist, je ebener die Oberfläche des für das diffraktive Element verwendeten Substrates ist. Ein weiteres wichtiges Merkmal des Substrates besteht darin, dass das flächige Substrat nicht verformbar sein darf, sondern eine bestimmte Steifigkeit haben soll. Sowohl eine hohe Ebenheit als auch eine hohe Steifigkeit des flächigen Substrats ließe sich durch eine entsprechende Dicke verwirklichen. Die Verwendung dicker flächiger Substrate stellt jedoch bei der Herstellung diffraktiver Elemente ein Problem dar, da für herkömmliche Lithographieanlagen lediglich Dicken von wenigen Millimetern zulässig sind. Diese Einschränkung resultiert aus dem Handling der Substrate bei der Belackung und Entwicklung (die Substrate müssen für den häufig verwendeten Spin-Coating-Prozess mit hoher Drehgeschwindigkeit rotiert werden), aus der Substratmasse, die auf den hochpräzisen x-y-Tischen der Lithographieanlagen noch mit ausreichender Genauigkeit bewegt werden kann, sowie aus thermischen Verhältnissen, die bei der Strukturübertragung in das Substrat mittels Ionenätzen eine Rolle spielen. Bei zu dicken flächigen Substraten kann die durch den Ionenbeschuss eingebrachte Wärme nicht ausreichend über das Substrat abgeführt werden, was zu einer Degeneration der Resistmaske führen kann.

Die geringe Dicke des flächigen Substrats von wenigen Millimetern ist für den Lithographieprozess unerheblich, da während des Lithographieprozesses das dünne flächige Substrat durch geeignete Halterungsmethoden, wie beispielsweise durch Vakuumansaugen oder elektrostatisches Ansaugungen an einen hochebenen Substrathalter, auf ausreichende Ebenheit gebracht wird.

Beim Ablösen des flächigen Substrats von der Halterung der jeweiligen Lithographieanlage geht die erwünschte Ebenheit des flächigen Substrats jedoch verloren. Die Ebenheit des flächigen Substrats, welche die Feinstruktur trägt, ist jedoch Grundvoraussetzung für optische Anwendungen. Außerdem muss die Steifigkeit des flächigen Substrats so ausgelegt sein, dass es möglichst zu keiner Deformation des diffraktiven Elementes durch äußere Einflüsse, wie Gravitation, Vibration, Stöße u.a. kommt, die die optische Funktion verschlechtert.

Ziel der Erfindung ist es somit, ein diffraktives Element sowie ein Verfahren zu seiner Herstellung zur Verfügung zu stellen, das eine hohe Wellenfrontgenauigkeit garantiert und somit für optische Anwendungen geeignet ist.

Diese Aufgabe wird durch das in Anspruch 1 angegebene diffraktive Element gelöst. Vorteilhafte Weiterbildungen des erfindungsgemäßen diffraktiven Elementes werden in den jeweiligen abhängigen Ansprüchen gegeben. Die Herstellung des diffraktiven Elementes erfolgt erfindungsgemäß nach Anspruch 10 sowie in dessen vorteilhaften Ausführungsformen gemäß den zugehörigen abhängigen Ansprüchen.

Zunächst wird in eine erste Seite eines flächigen Funktionssubstrats eine Feinstruktur eingebracht. Erfindungsgemäß wird anschließend das flächige Funktionssubstrat mit der ersten Seite auf ein steiferes, flächiges Trägersubstrat aufgebracht. Das flächige Trägersubstrat weist neben der höheren Steifigkeit eine höhere Oberflächenebenheit auf als das flächige Funktionssubstrat ohne die Feinstruktur. Das Aufbringen des flächigen Funktionssubstrats auf das flächige Trägersubstrat führt dazu, dass sich das flächige Trägersubstrat auf Grund seiner höheren Steifigkeit mit seiner Oberflächenebenheit gegenüber dem flächigen Funktionssubstrat durchsetzt und die Grenzfläche zwischen den beiden flächigen Substraten eben zieht. Vorteilhafterweise wird die höhere Steifigkeit des flächigen Trägersubstrats durch eine geeignete Materialwahl für das flächige Trägersubstrat und/oder durch eine entsprechende Dicke des flächigen Trägersubstrats erzielt. Üblicherweise gilt also für die Dicken der beiden flächigen Substrate, dass das steifere flächige Trägersubstrat dicker als das die optische Funktion tragende flächige Funktionssubstrat sein soll. Für optische Anwendungen weist das flächige Funktionssubstrat vorteilhafterweise eine Dicke von wenigen Millimetern, vorzugsweise eine Dicke kleiner oder gleich 4 mm auf. Erfindungsgemäß ist die Dicke des flächigen Funktions-substrats kleiner oder gleich 1/20 der flächigen Ausdehnung, insbesondere jedoch kleiner oder gleich 1/40 der flächigen Ausdehnung. Das flächige Trägersubstrat dagegen weist erfindungsgemäß eine Dicke größer oder gleich 1/15 der flächigen Ausdehnung, insbesondere größer oder gleich 1/8 der flächigen Ausdehnung, insbesondere größer oder gleich 5 mm, auf. Diese Dickenverhältnisse sind durch die Wahl der jeweiligen Materialien festgelegt und die genauen Dickenangaben variieren je nach verwendetem Material. Der Durchmesser des flächigen Funktionssubstrates sowie des flächigen Trägersubstrates liegt im Bereich von 100 mm bis 500 mm, insbesondere im Bereich von 200 mm bis 400 mm. Vorzugsweise beträgt der Durchmesser der beiden flächigen Substrate 300mm.

Bevorzugt sind die beiden flächigen Substrate dauerhaft miteinander verbunden, insbesondere dann, wenn die zweite Seite des flächigen Funktionssubstrats nach dem Aufbringen der ersten Seite des flächigen Funktionssubstrats auf das flächige Trägersubstrat glatt poliert wird. In besonderen Fällen können die beiden flächigen Substrate aber auch lösbar miteinander verbunden sein.

Die Herstellung der dauerhaften Verbindung der beiden flächigen Substrate erfolgt vorzugsweise durch Aufsprengen, Bonden und/oder geeignete Klebeverfahren. Zusätzlich kann die Verbindung durch die Nutzung von Vakuum erfolgen bzw. unterstützt werden. In diesem Fall ist es zwingend erforderlich, dass die erste, strukturierte Seite des flächigen Funktionssubstrats zwischen den beiden flächigen Substraten liegt. Vorzugsweise besteht die diffraktive Struktur aus Vertiefungen in der Oberfläche des Funktionssubstrats. Das Volumen, welches durch diese Vertiefungen gebildet wird, wird evakuiert und der äußere Luftdruck presst die beiden flächigen Substrate zusammen. Solange das Vakuum zwischen den beiden flächigen Substraten erhalten bleibt, bleiben die beiden Substrate miteinander verbunden.

Andererseits kann das Vakuum während des Bond- und/oder Klebeprozesses unterstützende Wirkung haben.

Erfindungsgemäß enthalten die beiden flächigen Substrate dieselben Materialien bzw. bestehen aus dem- oder denselben Materialen. Dies ist einerseits vorteilhaft, oder in bestimmten Fällen erforderlich für die unterschiedlichen Verbindungsverfahren, andererseits für eine spätere Nutzung sinnvoll, um gleiche thermische Ausdehnungskoeffizienten zu garantieren.

Insbesondere für optische Anwendungen ist es notwendig, dass wenigstens das die Feinstruktur tragende flächige Funktionssubstrat, bevorzugt jedoch beide flächigen Substrate, ein Material enthält oder daraus besteht, das für den Wellenlängenbereich, für den das diffraktive Element verwendet werden soll, transparent ist. Für optische Anwendungen im sichtbaren Wellenlängenbereich eignet sich bevorzugt $SiO_2$ und/oder Silizium.

Die Feinstruktur, insbesondere die Mikro- und/oder Nanostruktur, in der ersten Seite des flächigen Funktionssubstrats wird vorzugsweise mittels lithographischer Prozesse, wie Elektronenstrahl-, Laser- oder Photolithographie hergestellt.

Aufgrund der Tatsache, dass die erste, die Feinstruktur tragende Seite des flächigen Funktionssubstrats zwischen den beiden flächigen Substraten liegt, ergeben sich die nachfolgenden Vorteile:

Zum einen ist die innen liegende strukturierte erste Seite des flächigen Funktionssubstrats gegen äußere Einflüsse, wie beispielsweise Staub, Schmutz oder Berührungen bei der Handhabung des diffraktiven Elements geschützt und auch die Reinigung des diffraktiven Elementes wird erleichtert, da lediglich die unstrukturierte zweite Seite des flächigen Funktionssubstrats einer Reinigung bedarf.

Zum anderen besteht die Möglichkeit, die zweite Seite des flächigen Funktionssubstrats nachzubearbeiten. Dies ist insbesondere dann notwendig, wenn die beiden Oberflächen des flächigen Funktionssubstrats, also die erste und die zweite Seite, nicht ausreichend eben und/oder parallel sind und damit die optische Funktion des gesamten diffraktiven Elementes gestört ist. Ist die jeweilige Unebenheit durch interferometrische Messung bekannt, so kann dieser durch entsprechende Nachbearbeitung der unstrukturierten zweiten Seite des flächigen Funktionssubstrats gezielt reduziert werden. Mit Ebenheit der Substrate wird fachüblich die Abweichung der Oberflächenform von einer idealen Ebene im lateralen Maßstab größer 1 mm bezeichnet. Die Ebenheit kann dabei gemäß der DIN ISO 10110 Teil 5 als Passfehler eines ebenen Substrats definiert und bestimmt werden. Typischerweise betragen die Abweichungen dünner flächiger Substrate, wie etwa dem Funktionssubstrat, von der idealen Ebene mehr als 5 $\mu$m. Da für optische Anwendungen bevorzugt Ebenheiten mit Abweichungen kleiner oder gleich 0,5 $\mu$m, insbesondere kleiner oder gleich 0,1 $\mu$m, erforderlich sind, muss in der vorliegenden Erfindung das flächige Trägersubstrat entsprechende Ebenheit aufweisen.

Mögliche Verfahren zur Nachbearbeitung der unstrukturierten zweiten Seite des flächigen Funktionssubstrats sind das Polieren, vorzugsweise magneto-rheologisches Polieren und/oder das Ion-Beam-Figuring (IBF, Ionenstrahlbearbeitung) und/oder das Läppen.

Für die Herstellung eines diffraktiven Elementes mit hoher Wellenfrontgenauigkeit sowie den in den vorhergehenden Abschnitten erläuterten Merkmalen wird zunächst in eine erste Seite eines flächigen Funktionssubstrats eine Feinstruktur gebracht. Die erste Seite des flächigen Trägersubstrat wird dann erfindungsgemäß auf ein steiferes, und beispielsweise dickeres, flächiges Trägersubstrat aufgebracht und damit verbunden.

Das Ziel dieses Verfahrens liegt darin, dass die Oberfläche der ersten, die Feinstruktur tragenden Seite des flächigen Funktionssubstrats durch das Aufbringen auf ein flächiges Trägersubstrat mit hoher Oberflächenebenheit, eben gezogen wird. Eine Nachbearbeitung der zweiten Seite des flächigen Funktionssubstrats führt dann zu einer Verbesserung der Wellenfrontgenauigkeit des gesamten diffraktiven Elementes.

Vorzugsweise lässt sich dieses Verfahren zur Herstellung diffraktiver Elemente mit hoher Wellenfrontgenauigkeit nach einem der Ansprüche 1 bis 9, deren flächiges Funktionssubstrat eine Dicke von nur wenigen Mikrometern aufweist, anwenden. Dazu wird zunächst in eine Substratschicht mit einer Dicke kleiner oder gleich wenigen Millimetern eine Feinstruktur gebracht. Nach dem Aufbringen der ersten Seite des flächigen Funktionssubstrats auf das flächige Trägersubstrat kann nun von der zweiten Seite des flächigen Funktionssubstrats mit Hilfe geeigneter Verfahren ein Teil des ursprünglichen flächigen Funktionssubstrats abgetragen werden. Als geeignete Verfahren bieten sich magneto-rheologisches Polieren und/oder Ion-Beam-Figuring an. Eine solche Vorgehensweise bei der Herstellung von diffraktiven Elementen ist von Vorteil, da sich die Verarbeitung dicker und damit weniger zerbrechlicher Schichten als einfacher erweist, während dünne flächige Funktionssubstrate eine Voraussetzung für einige Herstellungsverfahren bilden. Außerdem kann durch diese Vorgehensweise die Ebenheit und die Parallelität der ersten und der zweiten Seite des flächigen Funktionssubstrats beeinflusst werden.

Eine weitere Möglichkeit ein diffraktives Element mit einer ersten Substratschicht, deren Dicke nur wenige Mikrometer beträgt, herzustellen, bietet die nachfolgende Variation des Herstellungsverfahrens: Zunächst wird ein flächiges Funktionssubstrat mit einer zweiten Seite auf ein zusätzliches flächiges Substrat aufgebracht. Anschließend wird in eine erste Seite des flächigen Funktionssubstrats eine Feinstruktur eingebracht. Danach wird das auf die zusätzliche Substratschicht aufgebrachte Funktionssubstrat mit seiner ersten die Feinstruktur tragenden Seite auf ein flächiges Trägersubstrat aufgebracht. Anschließend kann das zusätzliche flächige Substrat erfindungsgemäß chemisch selektiv entfernt werden. So ist es beispielsweise möglich, ein wenige Mikrometer dickes flächiges Funktionssubstrat aus $SiO_2$, das sich auf einem dünnen Siliziumwafer befindet und eine optische Funktionsstruktur trägt, auf ein dickeres, flächiges Trägersubstrat aufzubringen. Anschließend kann der Siliziumwafer chemisch selektiv entfernt werden, so dass die nur wenige Mikrometer dünne $SiO_2$-Schicht mit der innen liegenden Feinstruktur auf dem dicken flächigen Trägersubstrat zurückbleibt. Diese Vorgehensweise erweist sich als vorteilhaft, da die Schichtdickenverteilung der nur wenige Mikrometer dicken $SiO_2$-Schicht sehr genau kontrollierbar ist und die beiden Oberflächen, also die erste und zweite Seite des flächigen Funktionssubstrats weitgehend parallel sind.

Im Folgenden werden einige Ausführungsbeispiele und Figuren zur Erläuterung gegeben.

Es zeigen

Figur 1    ein Verfahren zur Herstellung eines erfindungsgemäßen diffraktiven Elements; und

Figur 2    ein weiteres Verfahren zur Herstellung einer Ausführungsform des erfindungsgemäßen diffraktiven Elements.

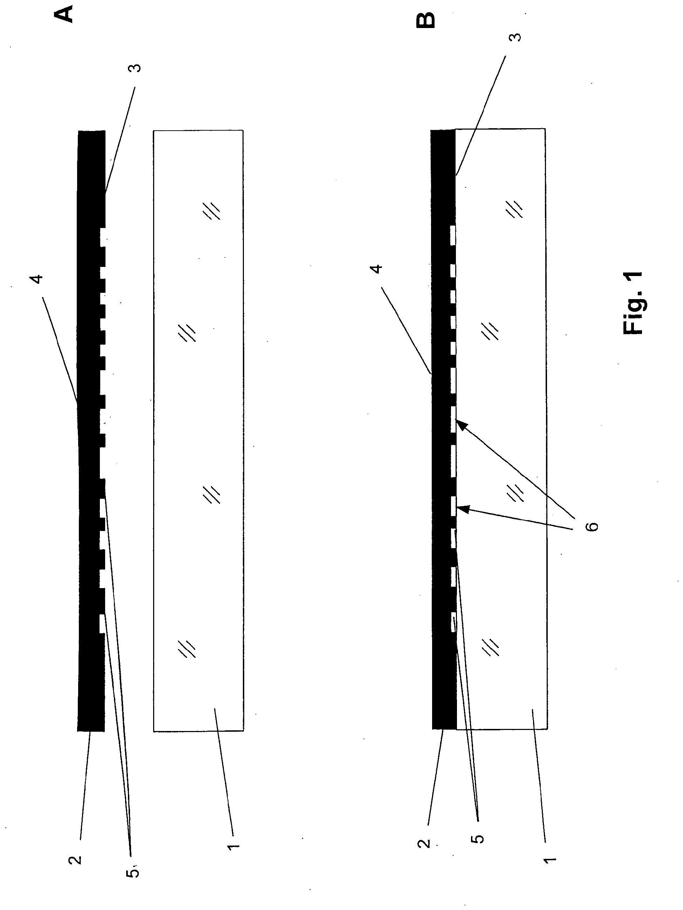

Figur 1A zeigt einen Querschnitt durch die Komponenten eines erfindungsgemäßen diffraktiven Elementes. Man erkennt eine dickere, hochebene Trägerschicht 1 mit einer Dicke von 30 mm und eine dünnere Funktionsschicht 2 mit einer Dicke von 0.8 mm. Der Durchmesser des Funktionssubstrates 2 sowie des Trägersubstrates 1 beläuft sich auf 300 mm. In der ersten, der Trägerschicht 1 zugewandten Seite 3 der Funktionsschicht 2 ist eine Feinstruktur 5 angeordnet. Die Oberfläche der zweiten Seite 4 des Funktionssubstrates weist Abweichungen von der Ebenheit einer idealen Ebene in der Größenordnung von 20 bis 50 $\mu$m auf. Die Abweichungen der Trägerschicht 1 von einer idealen Ebene betragen weniger als 500nm.

Figur 1B zeigt den Querschnitt durch das diffraktive Element nach dem Verbinden der Trägerschicht 1 mit der ersten, die Feinstruktur 5 tragenden Seite 3 des Funktionssubstrates 2. Es ist einerseits zu erkennen, dass sich beim Verbinden der beiden flächigen Substrate durch das Vakuumansaugen aufgrund der Feinstruktur 5 zwischen Trägersubstrat 1 und erster Seite 3 des Funktionssubstrates 2 evakuierte Bereiche gebildet haben, andererseits, dass sich die Oberfläche der zweiten Seite 4 des Funktionssubstrates 2 durch das Verbinden der beiden flächigen Substrate eben gezogen hat. Die Abweichungen der Oberfläche der zweiten Seite 4 des Funktionssubstrates 2 von einer idealen Ebene reduzieren sich auf höchstens 500 nm.

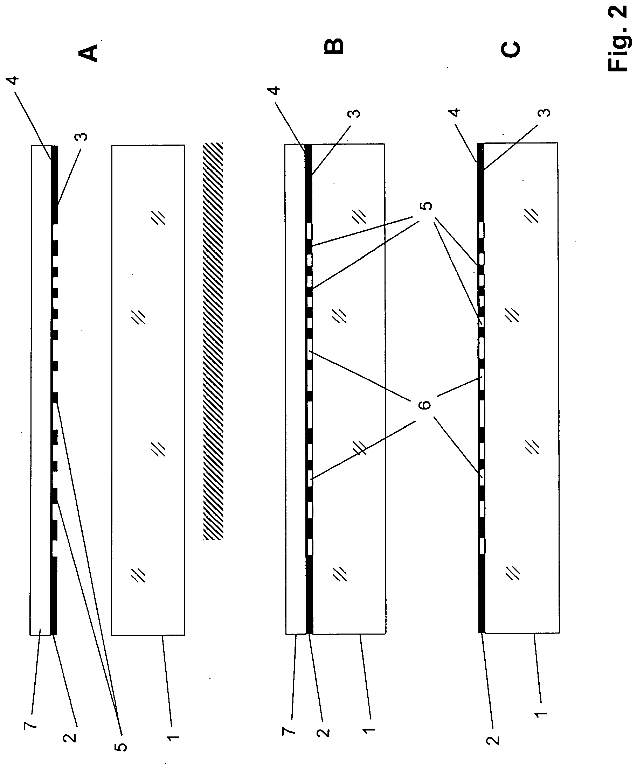

Figur 2A zeigt einen Querschnitt durch die Komponenten eines erfindungsgemäßen diffraktiven Elementes, welches durch ein sehr dünnes Funktionssubstrat 2 charakterisiert ist. Es ist ein dickeres Trägersubstrat 1 mit einer Dicke von 30 mm sowie ein wenige Mikrometer dünnes Funktionssubstrat 2 aus $SiO_2$, das mit seiner zweiten, unstrukturierten Seite 4 auf ein zusätzliches flächiges Substrat 7, beispielsweise auf einen Si-Wafer, aufgebracht ist. Das zusätzliche flächige Substrat 7 dient zur Stabilisierung des dünnen Funktionssubstrates 2 während des Einbringens der Feinstruktur 5 in die erste Seite 3 der Funktionsschicht 2 sowie beim Verbinden von Trägersubstrat 1 mit der ersten Seite 3 des Funktionssubstrates 2. Figur 2B zeigt den Querschnitt durch die Schichtfolge aus Trägersubstrat 1, Funktionssubstrat 2 und zusätzlicher Substratschicht 7 des diffraktiven Elementes aus Figur 2A nach dem Verbinden der ersten, die Feinstruktur 5 tragenden Seite 3 des wenige Micrometer dicken Funktionssubstrates 2 mit dem Trägersubstrat 1. Zwischen Trägersubstrat 1 und Funktionalsubstrat 2 erkennt man wieder aufgrund von Vakuumbenutzung beim Verbinden der flächigen Substrate evakuierte Bereiche 6.

Figur 2C zeigt abschließend das fertige diffraktive Element, bei dem die zusätzliche Substratschicht 7 aus Figur 2A und B chemisch selektiv entfernt wurde. Das diffraktive Element besteht nunmehr aus einem dickeren Trägersubstrat 1 und einem wenige Mikrometer dünnen Funktionssubstrat 2, dessen erste Seite 3 die Feinstruktur 5 trägt.

**Patentansprüche**

1.  Diffraktives Element mit
    einem flächigen Funktionssubstrat (2) mit einer ersten Seite (3),
    wobei in der ersten Seite (3) eine Feinstruktur (5) angeordnet ist, und wobei das Funktionssubstrat (2) mit seiner ersten Seite (3) auf einem flächigen Trägersubstrat (1) angeordnet ist, wobei das Trägersubstrat (1) eine höhere Steifigkeit als das Funktionssubstrat (2) aufweisl
    wobei das Funktionssubstrat (2) eine Dicke kleiner oder gleich 1/20 der flächigen Ausdehnung aufweist, **dadurch gekennzeichnet, dass**
    das Funktionssubstrat (2) und das Trägersubstrat (1) dasselbe Material enthalten oder daraus bestehen,
    wobei das Trägersubstrat (1) eine Dicke größer oder gleich 1/15 der flächigen Ausdehnung aufweist, und wobei das diffraktive Element durch ein Verfahren hergestellt wird, bei dem
    in eine erste Seite (3) eines flächigen Funktionssubstrats (2) eine Feinstruktur (5) eingebracht wird, und das flächige Funktionssubstrat (2) mit seiner ersten Seite (3) auf ein steiferes flächiges Trägersubstrat (1) aufgebracht wird, dessen Oberflächenebenheit höher ist als die Oberflächenebenheit der ersten Seite (3) des Funktionssubstrats (2) vor dem Einbringen der Feinstruktur (5).

2.  Diffraktives Element nach dem vorhergehenden Anspruch, **dadurch gekennzeichnet, dass** das Trägersubstrat (1) dicker als das Funktionssubstrat (2) ist.

3.  Diffraktives Element nach einem der vorhergehenden Ansprüche,
    **dadurch gekennzeichnet, dass** das Funktionssubstrat (2) eine Dicke kleiner oder gleich 1/40 der flächigen Ausdehnung, insbesondere kleiner oder gleich 4 mm, aufweist.

4.  Diffraktives Element nach einem der Ansprüche 1 bis 3, **dadurch gekennzeichnet, dass** das Funktionssubstrat (2) eine Dicke von $\leq 50\ \mu m$, vorteilhafterweise $\leq 10\ \mu m$, aufweist.

5.  Diffraktives Element nach einem der vorhergehenden Ansprüche,
    **dadurch gekennzeichnet, dass** das Trägersubstrat (1) eine Dicke größer oder gleich 1/8 der flächigen Ausdehnung, insbesondere größer oder gleich 5 mm, aufweist.

6.  Diffraktives Element nach einem der vorhergehenden Ansprüche,
    **dadurch gekennzeichnet, dass** mit dem diffraktiven Element eine Welle mit einem Wellenfrontfehler $\leq \dfrac{\lambda}{4}$, insbesondere $\leq \dfrac{\lambda}{10}$, erzeugt wird.

7.  Diffraktives Element nach einem der vorhergehenden Ansprüche,
    **dadurch gekennzeichnet, dass** die beiden flächigen Substrate (1, 2) dauerhaft miteinander verbunden sind.

8.  Diffraktives Element nach einem der vorhergehenden Ansprüche,
    **dadurch gekennzeichnet, dass** das Funktionssubstrat (2) ein Material enthält oder daraus besteht, das für den Wellenlängenbereich, für den das diffraktive Element verwendet werden soll, transparent ist, insbesondere Si oder $SiO_2$.

9.  Diffraktives Element nach einem der vorhergehenden Ansprüche,
    **dadurch gekennzeichnet, dass** es sich bei der Feinstruktur (5) in der ersten Seite (3) des Funktionssubstrats (2) um eine Mikro- und/oder Nanostruktur handelt.

10. Verfahren zur Herstellung eines diffraktiven Elementes, wobei in eine erste Seite (3) eines flächigen Funktionssubstrats (2) eine Feinstruktur (5) eingebracht wird, und wobei das flächige Funktionssubstrat (2) mit seiner ersten Seite (3) auf ein steiferes flächiges Trägersubstrat (1) aufgebracht wird, dessen Oberflächenebenheit höher ist als die Oberflächenebenheit der ersten Seite (3) des Funktionssubstrats (2) vor dem Einbringen der Feinstruktur (5), wobei ein diffraktives Element nach einem der Ansprüche 1 bis 9 hergestellt wird.

11. Verfahren nach dem vorhergehenden Anspruch, **dadurch gekennzeichnet, dass** das Trägersubstrat (1) dicker ist als das Funktionssubstrat (2).

12. Verfahren nach einem der Ansprüche 10 oder 11, **dadurch gekennzeichnet, dass** die zweite Seite (4) des Funktionssubstrats (2) nach Aufbringen auf das Trägersubstrat (1) auf eine vorbestimmte, gleichmäßige Dicke abgedünnt wird.

13. Verfahren nach einem der Ansprüche 10 bis 12, **dadurch gekennzeichnet, dass** das Funktionssubstrat (2) zur Herstellung der Feinstruktur (5) mit seiner zweiten Seite (4) auf eine zusätzliche Substratschicht (7) aufgebracht wird und dass nach dem Auf- oder Einbringen der Feinstruktur (5) auf oder in die erste Seite (3) des Funktionssubstrats (2) beide Schichten (2, 7) mit der ersten Seite (3) des Funktionssubstrats (2) flächig auf ein Trägersubstrat (1) aufgebracht werden und dass anschließend die zusätzliche Substratschicht (7) chemisch selektiv entfernt wird.

14. Verfahren nach einem der Ansprüche 10 bis 13, **dadurch gekennzeichnet, dass** die Oberfläche der zweiten unstrukturierten Seite (4) des Funktionssubstrats (2) als hochebene Oberfläche nachbearbeitet wird.

15. Verfahren nach einem der Ansprüche 10 bis 14, **dadurch gekennzeichnet, dass** die Oberflächenebenheit der zweiten, unstrukturierten Seite (4) des Funktionssubstrats (2) durch Ion-Beam-Figuring (Ionenstrahlbearbeitung) und/oder Polieren, insbesondere magneto-rheologisches Polieren, und/oder Läppen, realisiert wird.

**Claims**

1. A diffractive element with

   a flat functional substrate (2) having a first side (3),
   a fine structure (5) being disposed in the first side (3), and
   the functional substrate (2) with the first side (3) thereof being disposed on a flat carrier substrate (1), the carrier substrate (1) having a higher rigidity than the functional substrate (2),
   the functional substrate (2) having a thickness of less than or equal to 1/20 of the planar extension,
   **characterized in that**
   the functional substrate (2) and the carrier substrate (1) comprise or consist of the same material,
   the carrier substrate (1) having a thickness of greater than or equal to 1/15 of the planar extension, and
   the diffractive element being produced by a method in which a fine structure (5) is introduced into a first side (3) of a flat functional substrate (2), and
   the flat functional substrate (2) being applied with its first side (3) onto a more rigid, flat carrier substrate (1) having a higher degree of surface flatness than the surface flatness of the first side (3) of the functional substrate (2) before the fine structure (5) is introduced.

2. The diffractive element according to the preceding claim, **characterized in that** the carrier substrate (1) is thicker than the functional substrate (2).

3. A diffractive element according to any one of the preceding claims, **characterized in that** the functional substrate (2) has a thickness that is smaller than or equal to 1/40 of the planar extension, in particular smaller than or equal to 4 mm.

4. A diffractive element according to any one of claims 1 to 3, **characterized in that** the functional substrate (2) has a thickness of $\leq 50\ \mu m$, preferably of $\leq 10\ \mu m$.

5. A diffractive element according to any one of the preceding claims, **characterized in that** the carrier substrate (1) has a thickness that is greater than or equal to 1/8 of the planar extension, in particular greater than or equal to 5 mm.

6. A diffractive element according to any one of the preceding claims, **characterized in that** a wave having a wavefront error $\leq \dfrac{\lambda}{4}$, in particular $\leq \dfrac{\lambda}{10}$, is generated by the diffractive element.

7. A diffractive element according to any one of the preceding claims, **characterized in that** the two flat substrates (1, 2) are permanently connected to each other.

8. A diffractive element according to any one of the preceding claims, **characterized in that** the functional substrate (2) comprises or consists of a material that is transparent to the wavelength range for which the diffractive element is to be used, in particular Si or $SiO_2$.

**9.** A diffractive element according to any one of the preceding claims, **characterized in that** the fine structure (5) in the first side (3) of the functional substrate (2) is a microstructure and/or nanostructure.

**10.** A method for producing a diffractive element, a fine structure (5) being introduced into a first side (3) of a flat functional substrate (2), and the flat functional substrate (2) being applied with its first side (3) onto a more rigid, flat carrier substrate (1) having a higher degree of surface flatness than the surface flatness of the first side (3) of the functional substrate (2) before the fine structure (5) is introduced, a diffractive element according to any one of claims 1 to 9 being produced.

**11.** The method according to the preceding claim, **characterized in that** the carrier substrate (1) is thicker than the functional substrate (2).

**12.** The method according to either claim 10 or 11, **characterized in that** the second side (4) of the functional substrate (2), after having been applied to the carrier substrate (1), is thinned to a predetermined, uniform thickness.

**13.** A method according to any one of claims 10 to 12, **characterized in that**, for the creation of the fine structure (5), the functional substrate (2) is, with its second side (4), applied onto an additional substrate layer (7), and that, after the fine structure (5) has been applied onto or introduced into the first side (3) of the functional substrate (2), both layers (2, 7) are, with the first side (3) of the functional substrate (2), applied in a planar manner onto a carrier substrate (1), and that, subsequently, the additional substrate layer (7) is selectively removed chemically.

**14.** A method according to any one of claims 10 to 13, **characterized in that** the surface of the second unstructured side (4) of the functional substrate (2) is subsequently processed as an extremely flat surface.

**15.** A method according to any one of claims 10 to 14, **characterized in that** the surface flatness of the second, unstructured side (4) of the functional substrate (2) is achieved by ion beam figuring (ion beam processing) and/or polishing, in particular magnetorheological polishing, and/or lapping.

**Revendications**

**1.** Elément diffractif comprenant

un substrat fonctionnel (2) plan avec une première face (3),

dans lequel une structure fine (5) est disposée dans la première face (3), et dans lequel le substrat fonctionnel (2) est disposé avec sa première face (3) sur un substrat de support (1) plan, dans lequel le substrat de support (1) présente une rigidité plus élevée que le substrat fonctionnel (2),
dans lequel le substrat fonctionnel (2) présente une épaisseur inférieure ou égale à 1/20 de l'étendue plane,
**caractérisé en ce que**
le substrat fonctionnel (2) et le substrat de support (1) contiennent le même matériau ou en sont constitués,
dans lequel le substrat de support (1) présente une épaisseur supérieure ou égale à 1/15 de l'étendue plane, et
dans lequel l'élément diffractif est fabriqué par un procédé dans lequel une structure fine (5) est ménagée dans une première face (3) d'un substrat fonctionnel (2) plan, et
le substrat fonctionnel (2) plan est appliqué avec sa première face (3) sur un substrat de support (1) plan plus rigide, dont la planéité de surface est plus élevée que la planéité de surface de la première face (3) du substrat fonctionnel (2) avant d'insérer la structure fine (5).

**2.** Elément diffractif selon la revendication précédente, **caractérisé en ce que** le substrat de support (1) est plus épais que le substrat fonctionnel (2).

**3.** Elément diffractif selon l'une quelconque des revendications précédentes, **caractérisé en ce que** le substrat fonctionnel (2) présente une épaisseur inférieure ou égale à 1/40 de l'étendue plane, en particulier inférieure ou égale à 4 mm.

**4.** Elément diffractif selon l'une quelconque des revendications 1 à 3, **caractérisé en ce que** le substrat fonctionnel (2) présente une épaisseur inférieure ou égale à 50 $\mu$m, de manière avantageuse inférieure ou égale à 10 $\mu$m.

**5.** Elément diffractif selon l'une quelconque des revendications précédentes, **caractérisé en ce que** le substrat de support (1) présente une épaisseur supérieure ou égale à 1/8 de l'étendue plane, en particulier supérieure ou égale à 5 mm.

**6.** Elément diffractif selon l'une quelconque des revendications précédentes, **caractérisé en ce qu'**une onde avec un défaut de front d'onde $\leq \frac{\lambda}{4}$, en particulier $\leq \frac{\lambda}{10}$, est produite avec l'élément diffractif.

**7.** Elément diffractif selon l'une quelconque des revendications précédentes, **caractérisé en ce que** les deux substrats (1, 2) plans sont reliés l'un à l'autre de manière durable.

**8.** Elément diffractif selon l'une quelconque des revendications précédentes, **caractérisé en ce que** le substrat fonctionnel (2) contient un matériau qui est transparent pour la gamme de longueurs d'onde pour laquelle l'élément diffractif vise à être utilisé, en particulier Si ou $SiO_2$, ou en est constitué.

**9.** Elément diffractif selon l'une quelconque des revendications précédentes, **caractérisé en ce que** la structure fine (5) dans la première face (3) du substrat fonctionnel (2) est une micro et/ou nanostructure.

**10.** Procédé de fabrication d'un élément diffractif, dans lequel une structure fine (5) est ménagée dans une première face (3) d'un substrat fonctionnel (2) plan, et dans lequel le substrat fonctionnel (2) plan est appliqué avec sa première face (3) sur un substrat de support (1) plan plus rigide, dont la planéité de surface est plus élevée que la planéité de surface de la première face (3) du substrat fonctionnel (2) avant d'insérer la structure fine (5), dans lequel un élément diffractif selon l'une quelconque des revendications 1 à 9 est fabriqué.

**11.** Procédé selon la revendication précédente, **caractérisé en ce que** le substrat de support (1) est plus épais que le substrat fonctionnel (2).

**12.** Procédé selon l'une quelconque des revendications 10 ou 11, **caractérisé en ce que** la deuxième face (4) du substrat fonctionnel (2), après l'application sur le substrat de support (1), est amincie à une épaisseur uniforme prédéfinie.

**13.** Procédé selon l'une quelconque des revendications 10 à 12, **caractérisé en ce que** le substrat fonctionnel (2), pour la fabrication de la structure fine (5), est appliqué avec sa deuxième face (4) sur une couche de substrat (7) additionnelle et que, après l'application ou l'insertion de la structure fine (5) sur ou dans la première face (3) du substrat fonctionnel (2), les deux couches (2, 7) avec la première face (3) du substrat fonctionnel (2) sont appliquées à plat sur un substrat de support (1) et que la couche de substrat (7) additionnelle est ensuite éliminée chimiquement de manière sélective.

**14.** Procédé selon l'une quelconque des revendications 10 à 13, **caractérisé en ce que** la surface de la deuxième face (4) non structurée du substrat fonctionnel (2) est post-usinée en tant que surface très plate.

**15.** Procédé selon l'une quelconque des revendications 10 à 14, **caractérisé en ce que** la planéité de surface de la deuxième face (4) non structurée du substrat fonctionnel (2) est réalisée par façonnage par faisceau ionique (usinage par faisceau ionique) et/ou par polissage, en particulier polissage magnétorhéologique, et/ou rodage.

Fig. 1

EP 2 265 980 B1

**Fig. 2**

EP 2 265 980 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4921319 A1
- US 20030032039 A1
- JP 2003294947 A
- JP 2004226610 A

**In der Beschreibung aufgeführte Nicht-Patentliteratur**

- **U.D. ZEITNER ; E.B. KLEY.** *Advanced Lithography for Micro-Optics,* 2006